# EUROPEAN PATENT APPLICATION

(11) **EP 2 650 726 A2**
(43) Date of publication of application: **16.10.2013**
(21) Application number: 11854758.7
(22) Date of filing: 20.12.2011
(51) Int. Cl.: G03B 21/00, G02F 1/1333, G02F 1/167

(54) **CURVED SURFACE DISPLAY DEVICE**

(30) Priority: 06.01.2011 KR 20110001220
(71) Applicant: Tovis Co., Ltd., Yeonsu-gu, Incheon 406-840 (KR)
(72) Inventor: KIM, Yong-Beom, Yeonsu-gu Incheon 406-840 (KR); KIM, Yang-Rae, Yeonsu-gu Incheon 406-840 (KR); KIM, Seung-Jin, Gyeonggi-do 422-755 (KR)
(74) Representative: Manitz, Finsterwald & Partner GbR
(86) International application number: PCT/KR2011/009827
(87) International publication number: WO 2012/093785

(57) **Abstract**

A curved surface display device includes: a grayscale image projection device which projects a grayscale image; and a color filter disposed in front of the grayscale image projection device and having a desired curved shape. By disposing a color filter having a curved shape in front of a grayscale image projection device, a curved surface display device displaying color images can be realized through a simple structure.

## Description

### [Field of the Invention]

The present invention relates to a curved surface display device with a curved shape.

### [Background Art]

Various kinds of display devices are developed and used with the development of technologies of a display device.

A display device has conventionally a shape of a flat surface, but a curved surface display may be more suitable depending on the uses of display devices.

A method for forming a curved surface display by manufacturing a liquid crystal display device using flexible substrates has been introduced.

However, in case of manufacturing a curved surface display device using flexible substrates, there are problems that image quality may be deteriorated due to characteristics of flexible material, and manufacturing cost thereof is relatively high and manufacturing process is complicated.

### [Detailed Description of the Invention]

### [Technical Problem]

The present invention has been made in an effort to solve the above-mentioned problem and to provide a curved surface display device having a simple structure.

### [Technical Solution]

A curved surface display device according to an exemplary embodiment of the present invention includes: a grayscale image projection device which projects a grayscale image; and a color filter disposed in front of the grayscale image projection device and having a desired curved shape.

The color filter may be made by being formed on a substrate and then being etched to a thickness to be bent or may be made by being formed a flexible film.

The color filter may be attached to a fixing member in a state of maintain the desired curved shape.

The grayscale image projection device may be a grayscale image projector or a grayscale liquid crystal display panel.

### [Advantageous Effects]

According to the present invention, by disposing a color filter having a curved shape in front of a grayscale image projection device, a curved surface display device displaying color images can be realized through a simple structure.

Further, by changing the shape and the size of the color filter, the shape and the size of the screen of the curved surface display device can be easily changed.

### [Brief Description of Drawings]

FIG. 1 is a schematic view of a curved surface display device according to an embodiment of the present invention.
FIG. 2 is a schematic view of a curved surface display device according to another embodiment of the present invention.
FIG. 3 is a schematic view of a curved surface display device according to yet another embodiment of the present invention.
FIG. 4 is a schematic view of a curved surface display device according to yet another embodiment of the present invention.

### [Detailed Description of the Embodiments]

Embodiments of the present invention will be described in detail with reference to the accompanied drawings.

In the drawings, the thickness of layers, regions, etc. are exaggerated for clarity. Like reference numerals designate like elements throughout the specification. It will be understood that when an element such as a layer or a film is referred to as being "in front of" or "behind" another element, it can be directly in front of the other element or intervening elements may also be present. In contrast, when an element is referred to as being "directly in front of" or "directly behind" another element, there are no intervening elements present.

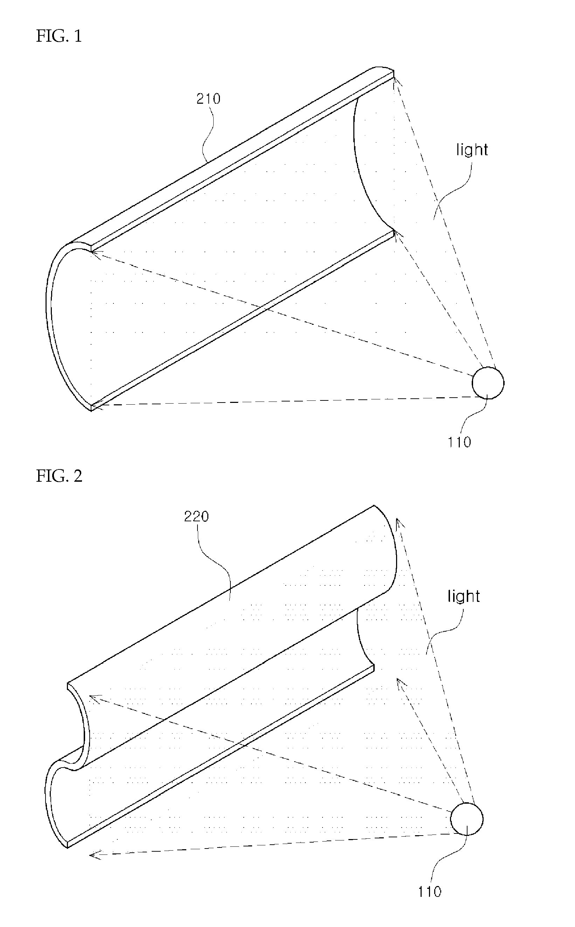

Referring to FIG. 1, a curved surface display device according to an embodiment of the present invention includes a grayscale image projection device 110. In this embodiment, the grayscale image projection device 110 is a grayscale projector.

A color filter 210 is disposed in front of the grayscale projector 110. At this time, the color filter 210 has a desired curved shape. Here, the desired curved shape means the curved shape of a curved surface display device. Since the color filter has a curved shape, a curved surface display device can be formed even though the grayscale image projection device 110 does not have a curved shaped.

The color filter 210 may be formed on a substrate such as a glass substrate and may be etched to a thickness at which it can be flexible, so it can be bent in a desired curved shape. Although not shown in the drawings, the color filter 210 which has been bent in a curved shape may be fixed by a frame to maintain the bent state.

Meanwhile, referring to FIG. 2, according to another embodiment of the present invention, a color filter 220 may be formed on a flexible film. For example, the color filter 220 may be formed on a flexible synthetic resin film.

Although the shapes of the color filters 210 and 220 are exemplarily shown in FIG. 1 and FIG. 2, the shape of the color filters 210 and 220 does not limited thereto and may be variously altered.

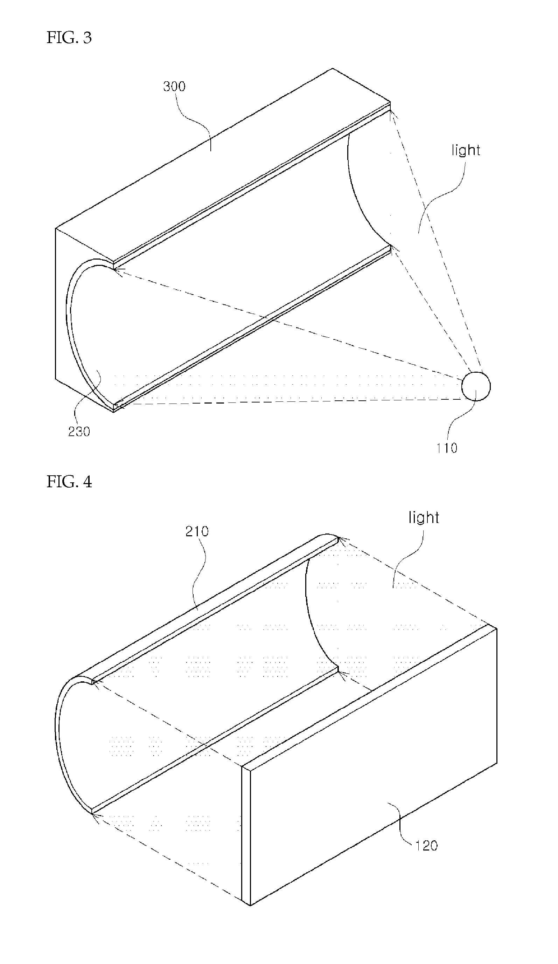

Meanwhile, referring to FIG. 3, a color filter 230 may be fixed to a fixing member 300 in a state of maintaining a desired curved shape. That is, as shown in the drawing, a surface having the same curved shape with the desired curved shape is provided to the fixing member 300, and the color filter 230 can be attached to the surface. As such, since the color filter 230 is attached to the fixing member 300 in a state of maintaining the desired shape, the structural strength of the color filter 230 can be increased and accordingly the overall structural strength of the curved surface display can be substantially increased. At this time, the color filter 230 may be formed on the substrate and then be etched to a thickness in which it can be flexible and alternately may be formed on a flexible film.

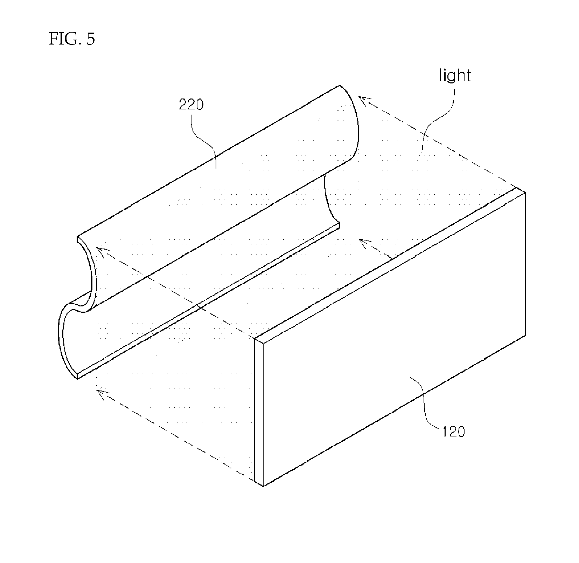

Meanwhile, referring to FIG. 4 and FIG. 5, a grayscale image projection device 120 may be a grayscale liquid crystal display panel. In a conventional liquid crystal display panel, a color filter is provided to an upper substrate (or referred to as a color filter substrate) which is disposed above among two substrates of the liquid crystal display panel to realize a color image, but the grayscale liquid crystal display panel 120 according to an embodiment of the present invention does not have a color filter. The other structures except the color filter may be equal to the conventional liquid crystal display panel, so detailed description for the same will be omitted. At this time, the color filter 210 which is formed on the substrate and is then etched to a thickness to be bent may be disposed in front of the grayscale liquid crystal display panel 120, or the color filter 220 which is formed on a flexible film may be disposed in front of the grayscale liquid crystal display panel 120.

As described above, by disposing the color filter 210, 220 or 230 having desired curved shapes in front of the grayscale image projection device 110 or 120, a curved surface display device which can display color image can be realized through a very simple structure. Furthermore, by changing the shape and the size of the color filter, the shape and the size of the screen of the curved surface display device can be easily changed.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

### [Industrial Applicability]

The present invention relates to a curved surface display device and can be applied to various display devices, so it has an industrial applicability.

## Claims

1. A curved surface display device comprising:
a grayscale image projection device which projects an grayscale image; and
a color filter disposed in front of the grayscale image projection device and having a desired curved shape.

2. The curved surface display device of claim 1, wherein the color filter is made by being formed on a substrate and then being etched to a thickness to be bent or is made by being formed a flexible film.

3. The curved surface display device of claim 1, wherein the color filter is attached to a fixing member in a state of maintain the desired curved shape.

4. The curved surface display device of claim 1, wherein the grayscale image projection device is a grayscale image projector or a grayscale liquid crystal display panel.
